# EUROPÄISCHE PATENTANMELDUNG

(11) **EP 1 659 417 A1**
(43) Veröffentlichungstag der Anmeldung: **24.05.2006**
(21) Anmeldenummer: 04027500.0
(22) Anmeldetag: 19.11.2004
(51) Int. Cl.: G01S 17/02, G01S 17/42, G01S 17/88, G01C 1/00

(54) **Verfahren zur Bestimmung der Ausrichtung eines Ausrichtungsindikators**

(71) Anmelder: Leica Geosystems AG, 9435 Heerbrugg (CH)
(72) Erfinder: Kirschner, Holger, 9435 Heerbrugg (CH)
(74) Vertreter: Harmann, Bernd-Günther

(57) **Zusammenfassung**

Zum Zweck der Ermittelung der Ausrichtung eines Ausrichtungsindikators werden von einem Abstandsmessensor und einem Bildsensor in einem Messgerät (1) ein Abstand von wenigstens einem und ein Bild von wenigstens drei reflektiven Bereichen auf dem Ausrichtungsindikator erfasst. Die Abstandsmessung und Bilderfassung erfolgt vermittels einer gerichteten Emission eines kollimierten ersten Strahlenbündels (2) und eines divergenten zweiten Strahlenbündels (3) mit unterschiedlicher Wellenlänge und/oder Polarisation in Richtung des Ausrichtungsindikators und einer gleichzeitigen Erfassung des reflektierten und/oder gestreuten ersten und zweiten Strahlenbündels (2',3'). Die reflektiven Bereiche auf dem Ausrichtungsindikator sind so ausgebildet und angeordnet, dass sie an einem Zielpunkt positionierbar sind, sowie in detektierbarer geometrischer Beziehung zueinander stehen und vermittels der Bilderfassung gleichzeitig aufgelöst werden können. Anhand der Ausrichtungsbestimmung können unter anderem Abstände zu - auch nicht direkt einsehbaren - Zielpunkten genau bestimmt werden.

## Beschreibung

Die Erfindung bezieht sich auf ein Verfahren zur Bestimmung der Ausrichtung eines Ausrichtungsindikators gemäss dem Oberbegriff des Anspruchs 1, sowie einen Ausrichtungsindikator gemäss dem Oberbegriff des Anspruchs 9, sowie die Verwendung des Verfahrens und die Verwendung des Ausrichtungsindikators.

Die Kenntnis der Ausrichtung einer Anordnung ist für viele Anwendungen wichtig, wie z.B. im Vermessungswesen bei der Messung eines Abstands zu einem Zielpunkt über einen eventuell nicht senkrecht über dem Zielpunkt stehenden Reflektorstock, in der Luft- und Raumfahrt beim Andocken von Flugzeugen, beispielsweise zur Betankung, oder in der automatischen Maschinensteuerung zur Überwachung des Verlaufs einer neugebauten Strasse. In diesen Bereichen wird die räumliche Lage eines Zielpunkts häufig mit optischen Messinstrumenten, wie Theodoliten, Kameras oder Laserdistanzmessern, bestimmt. Oft wird zum Zweck der Messung am Zielpunkt ein Tastwerkzeug mit lichtemittierenden und/oder licht-reflektierenden Punkten positioniert.

So offenbart die WO 91/16598 ein System zum Bestimmen der Beschaffenheit einer Fläche, welches sich aus wenigstens zwei opto-elektronischen Sensoren und einem Werkzeug zusammensetzt, welches Werkzeug mit wenigstens zwei Lichtquellen und drei Kontaktpunkten oder einer Kontaktfläche ausgestattet ist. Das Werkzeug wird vermittels der Kontaktpunkte an einer Fläche befestigt, und die Orientierung der Fläche wird über die Messung der Raumkoordinaten der Lichtquellen und deren bekannte Position relativ zu den Kontaktpunkten bestimmt. Ein solches Werkzeug zur Ausrichtungsbestimmung erfordert aber eine Stromversorgung am Zielort, die an schwer zugänglichen Zielen oft nicht bereitgestellt werden kann.

In der EP 0 880 674 ist ein Verfahren offenbart, vermittels welchem über eine Kombination von Laserabstandsmessung und Photogrammetrietechnik die Raumkoordinaten von Zielpunkten bestimmt werden. Dabei wird ein Berührungswerkzeug mit mehreren Reflexionspunkten an einem Zielpunkt positioniert. Ein Laser-Bereichsfinder misst den Abstand zu einem oder mehreren Reflexionspunkten, und eine Kamera nimmt das Bild der Reflexionspunkte auf. Auf der Kamera ist als Zielbeleuchtung eine Blitzlichtlampe zum Beleuchten der Reflexionspunkte angebracht. Aus dem Bild der Reflexionspunkte auf dem Kamerasensor werden die Position und Ausrichtung des Berührungswerkzeugs berechnet. Das System ist vor allem für Messungen auf geringe Entfernungen, besonders für die Fahrzeug- und Flugzeugindustrie, optimiert, da mit einer Blitzlichtlampe beleuchtet wird. Bei einer Messung auf grosse Distanzen wird die Abstandsmessung schwierig bis unmöglich, da mehrere Reflexionspunkte ins Gesichtsfeld des EDM geraten. Zudem unterliegt das Verfahren bei Verwendung von Reflektoren als Messpunkte der Kamera aufgrund der fehlenden Einkopplung der Zielbeleuchtung auf die optische Achse der Kamera Messfehlern. Dabei ist der Fehler in der Positionsbestimmung der Messpunkte von derselben Grössenordnung wie der Abstand des Zielbeleuchters von der optischen Achse der Kamera. Für geodätisch relevante Messgenauigkeiten ist das Verfahren ohne aktiv leuchtende Messpunkte somit nicht geeignet.

Die Aufgabe der vorliegenden Erfindung besteht daher darin, Mängel des Standes der Technik zu beheben und ein Verfahren bereitzustellen, vermittels welchem die Ausrichtung und/oder Position eines Ausrichtungsindikators auch auf geodätisch relevante Entfernungen mit der gattungsgemäss erforderlichen Genauigkeit bestimmt werden kann, was unter Anderem die Bestimmung der Position eines nicht direkt einsehbaren Zielpunktes, sowie die automatische Steuerung von Fahrzeugen, wie z.B. Baumaschinen, ermöglicht.

Eine weitere Aufgabe der Erfindung ist es, einen Ausrichtungsindikator mit reflektiven Bereichen bereitzustellen, der so ausgebildet ist, dass er an einem Zielpunkt positioniert und seine Ausrichtung mit einem Messgerät, insbesondere einem Tachymeter, in kurzer Zeit und auf grosse Entfernungen sehr genau bestimmt werden kann.

Diese Aufgaben werden durch die Gegenstände des Anspruchs 1 bzw. 9 oder der abhängigen Ansprüche gelöst bzw. die Lösungen weitergebildet.

Bei einem erfindungsgemässen Verfahren zur Bestimmung der Ausrichtung und/oder Position eines Ausrichtungsindikators wird ein Messgerät verwendet, welches eine Abstandmessensorik und eine Bilderfassungssensorik aufweist, insbesondere ein Tachymeter oder ein Zielfernrohr mit integriertem Abstandmesser und integrierter Kamera. Vorzugsweise sind die Abstandsmessensorik, die Bilderfassungssensorik, sowie die Messstrahlen für die Zielbeleuchtung koaxial ausgeführt, d.h. die optischen Achsen von Abstandsmess- und Bilderfassungssensorik und die zentralen Strahlen der Messstrahlenbündel liegen ausserhalb des Messgeräts in guter Näherung auf einer Achse.

Als Ausrichtungsindikator ist eine Anordnung vorgesehen, welche wenigstens drei reflektive Bereiche umfasst und an einem Zielpunkt positioniert und/oder befestigt werden kann. Die Anordnung kann auch mehr als drei reflektive Bereiche umfassen. Unter reflektivem Bereich ist ein Bereich zu verstehen, welcher von einer Strahlungsquelle ausgesandte und auf den Bereich auftreffende Strahlung zurückwirft. Natürlich sollte der Bereich Strahlung in der Art reflektieren, dass die Strahlung zu einem Detektor gelangt. Vorzugsweise werden Retroreflektoren als reflektive Bereiche eingesetzt. Es können aber sowohl Strahlung ungerichtet, als auch gerichtet reflektierende Reflektoren bzw. eine Kombination von beiden verwendet werden.

Die reflektiven Bereiche stehen in einer bekannten geometrischen Beziehung zueinander und sind in einer Weise angeordnet, dass sie vermittels der Bilderfassungssensorik gleichzeitig aufgelöst werden können. Besonders vorteilhaft ist eine nicht kollineare Anordnung der reflektiven Bereiche, insbesondere sollten die reflektiven Bereiche auf einer Ziellinie vom Messgerät zum Ausrichtungsindikator so angeordnet sein, dass sie sich nicht gegenseitig vollständig verdecken. Die Erfüllung dieser Anforderung ist naturgemäss von der Ausrichtung des Ausrichtungsindikators und dessen Orientierung gegenüber der Bilderfassungssensorik abhängig. Sind mehr als drei Reflektoren vorgesehen, wird es im Allgemeinen kein Problem darstellen, diese nicht-kollinear in einer Art und Weise anzuordnen, dass sich in keiner Stellung bzw. Orientierung der Anordnung alle reflektiven Bereiche gegenseitig verdecken. Eine grosse Zahl von reflektiven Bereichen erhöht jedoch die Komplexität, da zur Identifizierung des individuellen Bereichs eine Unterscheidbarkeit von den anderen Bereichen erforderlich ist. Zudem muß die Auflösbarkeit im Bild der Bilderfassungssensorik gewährleistet bleiben, so dass eine beliebige Erhöhung der Zahl von reflektiven Bereichen zwar die Erfassbarkeit von mindestens drei Bereichen gewährleistet, jedoch auch gleichzeitig komplexitätserhöhenden Aufwand bedingt. Die Wahl von Form und Anordnung der reflektiven Bereiche muß daher den beiden widersprechenden Anforderungen Rechnung tragen.

Vom Messgerät aus findet eine gerichtete Emission von Strahlung statt, welche auf die reflektiven Bereiche des Ausrichtungsindikators gerichtet wird und von diesen reflektiven Bereichen reflektiert und/oder gestreut wird und als reflektierte und/oder gestreute Strahlung von den Sensoren im Messgerät erfasst wird. Als Strahlungsemitter wird vorzugsweise ein Laser eingesetzt. Die Sensorik für die elektronische Abstandsmessung und die Bilderfassungssensorik werden koaxial ausgeführt, d.h. die optischen Achsen derselben liegen ausserhalb des Messgeräts in guter Näherung auf einer Achse. Die Strahlungsemitter für die Abstandsmessung und Bilderfassung bzw. Richtungsmessung werden so eingekoppelt, dass deren virtuelle Bilder geräteextern betrachtet ebenfalls auf dieser Achse liegen, sodass eine koaxiale Zielbeleuchtung für die Abstandsmessung und Bilderfassung stattfindet. Abstandsmessung und Bilderfassung werden gleichzeitig durchgeführt, dabei erfolgen die Abstandsmessung zu einem reflektiven Bereich und die Bilderfassung von wenigstens drei reflektiven Bereichen. Es können aber auch Bilder von mehr als drei reflektiven Bereichen erfasst werden. Zum Beispiel könnten auch vier reflektive Bereiche vorgesehen werden, wobei die Abstandsmessung zu einem ersten reflektiven Bereich und die Bilderfassung und/oder Richtungsmessung zu einem zweiten, dritten und vierten Bereich erfolgen könnte. Zur besseren Trennung von Abstandsmessung und Bilderfassung werden vom Messgerät zwei unterschiedliche Strahlenbündel emittiert, und zwar ein erstes kollimiertes Strahlenbündel und ein zweites divergentes Strahlenbündel. Die beiden Strahlenbündel unterscheiden sich zusätzlich in Wellenlänge oder Polarisation, oder in Wellenlänge und Polarisation. Dabei weist das divergente Strahlenbündel vorzugsweise eine Divergenz auf, die für typische geodätische Anwendungen dem Gesichtsfeld der Bilderfassungssensorik entspricht und grösser als das Gesichtsfeld der Abstandsmessensorik ist. Die dafür notwendige vergleichsweise geringe Divergenz der Zielbeleuchtung ermöglicht eine grosse Reichweite des Verfahrens ohne Überschreitung der Lasersicherheitsvorschriften. Unter kollimiertem Strahlenbündel wird ein Strahlenbündel mit einem gattungsgemäss kleinen Öffnungswinkel, wie z.B. 0.5°, verstanden.

Bei Messungen auf weite Entfernungen ist es möglich, dass mehr als nur ein reflektiver Bereich ins Gesichtsfeld der Abstandsmessensorik gerät, und die Abstandsmessung dadurch nicht korrekt bzw. nicht selektiv durchgeführt werden kann. Es ist deshalb oft zweckmässig, den reflektiven Bereichen Filter zuzuordnen bzw. Filter in den optischen Strahlengang einzubringen. Diese Zuordnung erfolgt durch Einbringen des bzw. der Filter in den Strahlengang vom Sensor zum Ausrichtungsindikator, beispielsweise anhand von den reflektiven Bereichen vorgeschalteten oder an den reflektiven Bereichen angebrachten Filtern, genauso können aber auch die reflektiven Bereiche selbst aus Filter-Material gefertigt werden bzw. dieses aufweisen, oder aber die Sensoren mit Filtern ausgestattet werden. Als Filter werden vorzugsweise Spektral- oder Polarisationsfilter verwendet, z.B. ist die Verwendung von Interferenz- und/oder Absorptionsfiltern, möglich. Zusätzlich werden die reflektiven Bereiche bevorzugt unterschiedlich gross ausgebildet, dadurch wird auch eine bessere Unterscheidung der verschiedenen reflektiven Bereiche in der Abbildung auf dem Bildsensor möglich. Im Allgemeinen wird der Retroreflektor, zu welchem die Abstandsmessung erfolgt, grösser ausgebildet als die anderen Reflektoren. Werden alle reflektiven Bereiche unterschiedlich gross ausgebildet, so ist der Ausrichtungsindikator insbesondere für Überkopfmessungen geeignet.

Die reflektiven Bereiche können unterschiedlich geformt und ausgebildet sein. Ein besonders grosser Winkelmessbereich ergibt sich für als Rundumreflektoren ausgebildete reflektive Bereiche, wie kugelförmige 4n-Reflektoren. Auch können zylinder- oder kugelförmige 360°-Reflektoren reflektive Bereiche darstellen. Eine andere Möglichkeit ist, die reflektiven Bereiche als Prismen, insbesondere Tripelprismen, auszubilden. Es können aber auch polierte Stahlelemente, verspiegelte Glaselemente, mit Reflektorfolie umhüllte Elemente, oder aus reflektivem Material ausgebildete Elemente, insbesondere Kugeln, eingesetzt werden. Reflektorfolie ist als reflektives Material leicht erhältlich, präzisere Messungen gewährleisten Reflektoren, die aus Tripelprismen oder Mikrolinsen gebildet sind, z.B. sogenannte "Katzenaugen"-Reflektoren.

Die reflektiven Bereiche werden im Allgemeinen über eine Verbindungseinheit - z.B. ein Gestänge - miteinander verbunden. Die Anordnung kann beliebig, beispielsweise sternförmig oder dreieckförmig sein, unter der Voraussetzung, dass die reflektiven Bereiche in jeder messtechnisch relevanten Stellung der Anordnung auf dem Bildsensor getrennt wahrgenommen werden können. Die - gegebenenfalls miteinander verbundenen - reflektiven Bereiche werden oftmals an einem weiteren Element detektierbarer Geometrie, im Folgenden Reflektorträger genannt, befestigt. Das kann z.B. ein Reflektorstock sein, welcher zu Vermessungszwecken an einem Zielpunkt plaziert wird. Die Befestigung kann so erfolgen, dass sich der Schwerpunkt der Anordnung im Schwerpunkt des Reflektorträgers befindet, was für praktische Einsätze oft günstig ist, die Befestigung kann aber je nach Einsatzgebiet variiert werden. Wird der Reflektorträger zum Zweck einer Abstands- und/oder Positionsbestimmung eines Zielpunktes an diesem Zielpunkt positioniert, so kann über die Abstandsbestimmung zu einem reflektiven Bereich am Reflektorträger und die Bestimmung der räumlichen Lage bzw. der Raumrichtungen von bzw. zu wenigstens zwei weiteren reflektiven Bereichen am Reflektorträger, sowie über die bekannten geometrischen Beziehungen zwischen den reflektiven Bereichen untereinander und zwischen den reflektiven Bereichen und dem Reflektorträger die Ausrichtung des Reflektorträgers und damit der Abstand bzw. die Position des Zielpunktes mit sehr hoher Genauigkeit bestimmt werden. Die Notwendigkeit der - oftmals fehlerbehafteten und hinsichtlich Handhabung aufwendigen - Horizontierung des Reflektorträgers entfällt. Vermittels dieser Methode können auch Abstände bzw. Positionen von Zielpunkten bestimmt werden, die vom Messgerät nicht direkt einsehbar sind - sogenannte "hidden points" -, wie z.B. von Punkten in Abwasserschächten, z.B. indem man den Reflektorträger darin plaziert, oder indem man mit z.B. einem Entfernungsmesser, an welchem ein Ausrichtungsindikator angebracht ist, in den Schacht hineinmisst.

Die Abstandsmessung erfolgt im Allgemeinen anhand einer Laserdistanzmessung, die Bestimmung der Ausrichtung im Allgemeinen anhand einer Bilderfassung. Beispielsweise werden von den reflektiven Bereichen virtuelle Bilder des Zielbeleuchters erzeugt, auf einen Bildsensor abgebildet, und aus deren Positionen die Raumrichtungen zu den reflektiven Bereichen bestimmt. Der Bildsensor kann beispielsweise ein CCD-Flächensensor oder eine Kamera sein.

Eine weitere mögliche Anwendung des erfindungsgemässen Ausrichtungs-Bestimmungs-Verfahrens, bzw. des erfindungsgemässen Ausrichtungsindikators, ergibt sich in der automatischen Maschinensteuerung. Der Ausrichtungsindikator wird an z.B. einer Baumaschine angebracht, und über die Bestimmung der Ausrichtung des Ausrichtungsindikators zu jedem Zeitpunkt - und damit die Bestimmung der Orientierung der Baumaschine - ist eine Überwachung z.B. einer Strassenneigung und automatische Steuerung des Fahrtwegs der Maschine möglich.

Das erfindungsgemässe Verfahren und der erfindungsgemässe Ausrichtungsindikator, sowie die erfindungsgemässe Verwendung von Verfahren und Ausrichtungsindikator werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine mögliche Messanordnung für ein erfindungsgemässes Verfahren,
- Fig. 2: ein mögliches Messgerät zur Durchführung eines erfindungsgemässen Verfahrens,
- Fig. 3: in vier Teilfiguren 3a, 3b, 3c, 3d mögliche Ausführungsbeispiele eines erfindungsgemässen Ausrichtungsindikators,
- Fig. 4: in zwei Teilfiguren 4a, 4b zwei Ausführungsbeispiele von einem Reflektorträger zugeordneten reflektiven Bereichen und deren Abbildungen,
- Fig 5: in vier Teilfiguren 5a, 5b, 5c, 5d vier mögliche Ausführungsbeispiele eines erfindungsgemässen Ausrichtungsindikators,
- Fig 6: eine Verwendung des erfindungsgemässen Ausrichtungsindikators zur Überwachung einer Baumaschine.

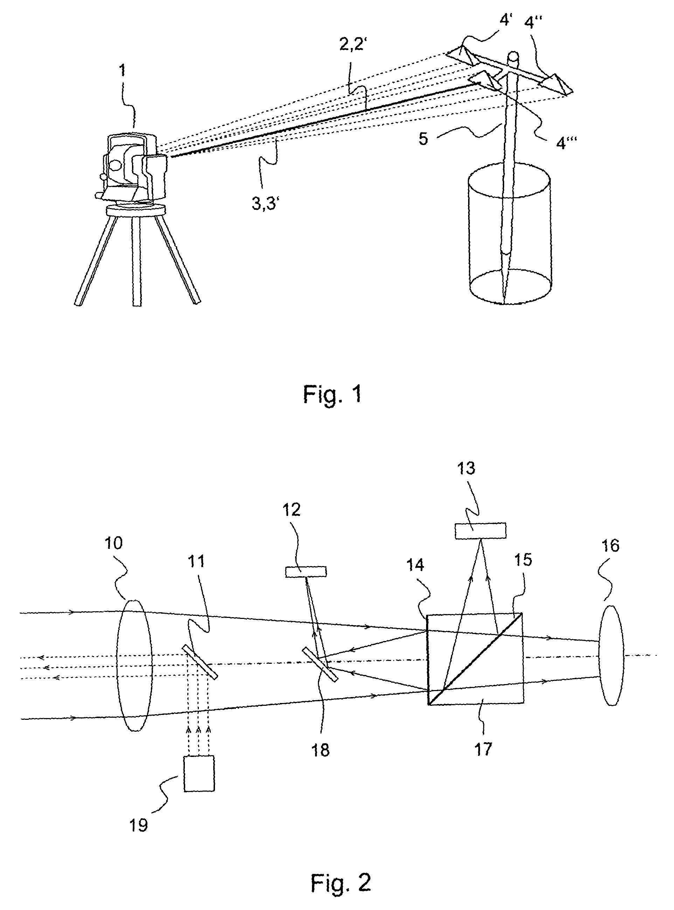

In Fig. 1 ist eine mögliche Anordnung zur Durchführung eines erfindungsgemässen Verfahrens zur Bestimmung der Ausrichtung und/oder Position eines Ausrichtungsindikators mit einem Messgerät 1 und einem Ausrichtungsindikator dargestellt. Das gezeigte Messgerät 1 kann ein Tachymeter mit einem Theodoliten und einem zu dessen optischer Achse koaxialen EDM sein, es kann genauso ein Fernrohr mit integriertem Abstandsmesser 12 und integrierter Kamera sein oder ein anderes optisches Instrument zur Abstandsmessung und Bilderfassung bzw. Richtungsbestimmung. Der Ausrichtungsindikator ist mit drei reflektiven Bereichen - z.B. drei Retroreflektoren 4' ,4 " .4''' - ausgebildet, die über Stangen miteinander verbunden und an einem Reflektorträger 5 - ein Lotstock - befestigt sind. Es versteht sich, dass genauso Kombinationen von ungerichtet mit gerichtet reflektierenden Bereichen als reflektive Bereiche eingesetzt werden können.

Die reflektiven Bereiche müssen nicht über ein Gestänge verbunden werden, sie können direkt am Reflektorträger 5 angebracht werden oder z.B. an einer am Reflektorträger 5 befestigten Halteplatte. In Fig. 1 sind die reflektiven Bereiche als Tripelprismen dargestellt. Selbstverständlich können die reflektiven Bereiche in beliebiger, dem Verwendungszweck angepasster, Form ausgebildet sein, wie z. B. als Kugeln, als Rundumreflektoren oder als zylinderförmige Reflektoren. Die durchgezogene Linie in Fig. 1 bezeichnet das kollimierte Strahlenbündel 2,2', welches zur Abstandsmessung herangezogen wird, die gestrichelten Linien deuten die Strahlen 3,3' für die Bilderfassung an. Vorzugsweise wird die Abstandsmessung mit einem Laserstrahl einer ersten Wellenlänge durchgeführt. Mit diesem Laserstrahl wird ein einzelner reflektiver Bereich 4''' genau angezielt und in bekannter Weise der Abstand zu diesem Bereich ermittelt. Der Einsatz eines kollimierten Strahlenbündels 2 ist hier für die Abstandsmessung insofern vorteilhaft, als verhindert werden soll, dass Strahlung von mehr als einem reflektiven Bereich von der Abstandsmessensorik empfangen wird, und die Messung durch überlappende reflektierte und/oder gestreute Strahlenbündel von unterschiedlichen reflektiven Bereichen verfälscht wird. Deshalb wird auch vorzugsweise für die Bilderfassung eine Strahlung mit einer von der Wellenlänge der Strahlung für die Abstandsmessung verschiedenen zweiten Wellenlänge eingesetzt. Die Strahlenbündel 3 für die Bilderfassung weisen vorzugsweise eine Divergenz auf, welche dem Gesichtsfeld der Bilderfassung entspricht, d.h. es soll eine grösstmögliche Anzahl von angestrahlten reflektiven Bereichen auf dem Bildsensor erfasst werden.

Fig. 2 zeigt einen möglichen Aufbau eines Messgeräts 1 zur Durchführung des erfindungsgemässen Verfahrens. Das Messgerät ist in diesem Beispiel als Fernrohr mit integriertem Distanzmessensor 12 und integriertem Bilderfassungssensor 13 ausgebildet. Von einer Strahlungsquelle 19 aus findet eine gerichtete Emission von Strahlung statt. Als Strahlungsquelle 19 werden vorzugsweise Laser eingesetzt. Die emittierte Strahlung wird vermittels eines ersten Reflexionselements 11 - hier als Spiegel mit einer Reflexionsschicht dargestellt - gegen einen Ausrichtungsindikator gerichtet. Von den reflektiven Bereichen des Ausrichtungsindikators zu einer Linse 10 reflektierte und/oder gestreute Strahlen werden vermittels der Linse 10 zu einem Teilerwürfel 17 mit einer dichroitischen und einer Strahlen-teildurchlässigen Schicht 14, 15 geleitet. Der Teilerwürfel 17 kann selbstverständlich durch ein anderes optisches Element mit ähnlichen optischen Eigenschaften ersetzt werden, insbesondere kann statt der teildurchlässigen Schicht auch eine zweite dichroitische Schicht verwendet werden. An der dichroitischen Schicht 14 des Teilerwürfels 17 werden die Strahlen der ersten Wellenlänge reflektiert und/oder gestreut und auf ein zweiten Reflexionselement 18 - hier ein Spiegel mit einer Reflexionsschicht - gerichtet, vermittels welchem die Strahlen aus der optischen Achse des Messgeräts ausgekoppelt und zum Abstandsmessensor 12 gelenkt werden. Die Strahlen zweiter Wellenlänge durchdringen die dichroitische Schicht 14 und werden an der zweiten für Strahlen teildurchlässigen Schicht 15 in Richtung des Bildsensors 13 ausgekoppelt. Zur Beobachtung oder in Kombination mit einer Zielmarkierung zur Anzielung können die Strahlen zu einem Okular (16) gelenkt werden.

Durch diesen Aufbau entsprechen die optische Achse des elektronischen Distanzmessers und die optische Achse der Bildsensorik in guter Näherung der Zielachse des Messgeräts. Ebenfalls auf dieser Achse liegen - aufgrund des koaxialen Aufbaus - geräteextern betrachtet die virtuellen Bilder der Emitter für die elektronische Distanzmessung und für die Bildsensorik.

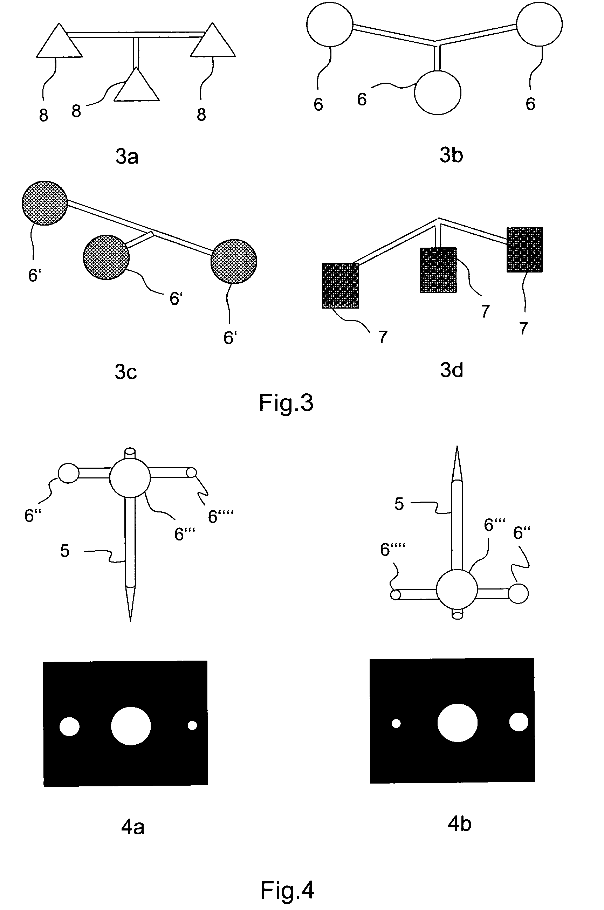

In Fig. 3 sind vier Ausführungsbeispiele eines erfindungsgemässen Ausrichtungsindikators dargestellt. Fig. 3a zeigt einen Ausrichtungsindikator mit reflektiven Bereichen, welche hier als Tripelprismen 8 ausgebildet und anhand von Verbindungselementen, hier als Stangen dargestellt, miteinander verbunden sind. Fig. 3b zeigt einen Ausrichtungsindikator mit als Kugeln ausgebildeten reflektiven Bereichen 6, die an einem Gestänge angebracht sind. Die reflektiven Bereiche in Fig. 3a und 3b können beispielsweise aus einem reflektiven Material gebildet sein, wie z.B. verspiegeltes Glas oder polierter Stahl, sie können aber auch mit Reflektorfolie oder einem anderen reflektiven Material umhüllt sein. In Fig. 3c ist ein Ausrichtungsindikator mit kugelförmigen Rundumreflektoren 6' als reflektive Bereiche dargestellt. Die kugelförmigen Rundumreflektoren 6' sind an einer Verbindungseinheit befestigt und aus "katzenaugenartigem" Material, d.h. aus zusammengesetzten Tripelprismen oder Mikrolinsen, ausgebildet. Fig. 3d zeigt eine Anordnung von reflektiven Bereichen aus mikrolinsen- oder tripelprismenbasiertem Material, welche einen zylinderförmigen Querschnitt haben und als 360°-Reflektoren ausgebildet sind. Die zylinderförmigen 360°-Reflektoren 7 sind so miteinander verbunden, dass sie bei einer Messung mit z.B. einem Tachymeter auf einer Ziellinie zwischen Tachymeteroptik und reflektiven Bereichen nicht hintereinander liegen und nicht alle reflektiven Bereiche denselben Abstand zum Tachymeter haben.

Fig. 4 zeigt in zwei Ausführungsbeispielen einen erfindungsgemässen Ausrichtungsindikator mit unterschiedlich grossen reflektiven Bereichen 6 " ,6 " ',6 " " und deren Abbildung auf einem Bildsensor 13. Die oberen Darstellungen in den Teilfiguren 4a und 4b zeigen jeweils den erfindungsgemässen Ausrichtungsindikator mit verschieden grossen reflektiven Bereichen 6 " , 6 " ' , 6 " " , welche miteinander verbunden und an einem Reflektorträger 5 angebracht sind. Die reflektiven Bereiche sind hier als Kugeln dargestellt, könnten aber selbstverständlich genauso als Kreise, Dreiecke, Vierecke, bzw. Prismen, Würfel, Zylinder oder andere Elemente detektierbarer Geometrie ausgebildet sein. Es ist auch nicht notwendig, dass alle reflektiven Bereiche dieselbe geometrische Form aufweisen. Es ist unter Umständen sogar vorteilhaft, reflektive Bereiche miteinander zu kombinieren, die sich in Form und/oder Grösse voneinander unterscheiden. Die Ausbildung der reflektiven Bereiche in unterschiedlichen Grössen ermöglicht Messungen in einem grossen Winkelbereich, wie z.B. auch Überkopfmessungen - siehe Fig. 4b. Eine solche Überkopfmessung könnte z.B. eine Messung zu einer Zimmerdecke darstellen. Bei unterschiedlich grossen reflektiven Bereichen 6" ,6"' ,6"" I erfolgt die Abstandsmessung vorzugsweise zum grössten reflektiven Bereich.

Die unteren Darstellungen in den Teilfiguren 4a und 4b zeigen die jeweiligen Abbildungen der jeweiligen verschieden grossen reflektiven Bereiche 6 " , 6 " ' , 6 " " aus den jeweiligen oberen Darstellungen auf einem Bildsensor 13. Es ist klar ersichtlich, dass die Abbildungen auf dem Bildsensor 13 den unterschiedlich gross ausgebildeten reflektiven Bereiche 6 " ,6 "',6 "" sofort eindeutig zugeordnet werden können.

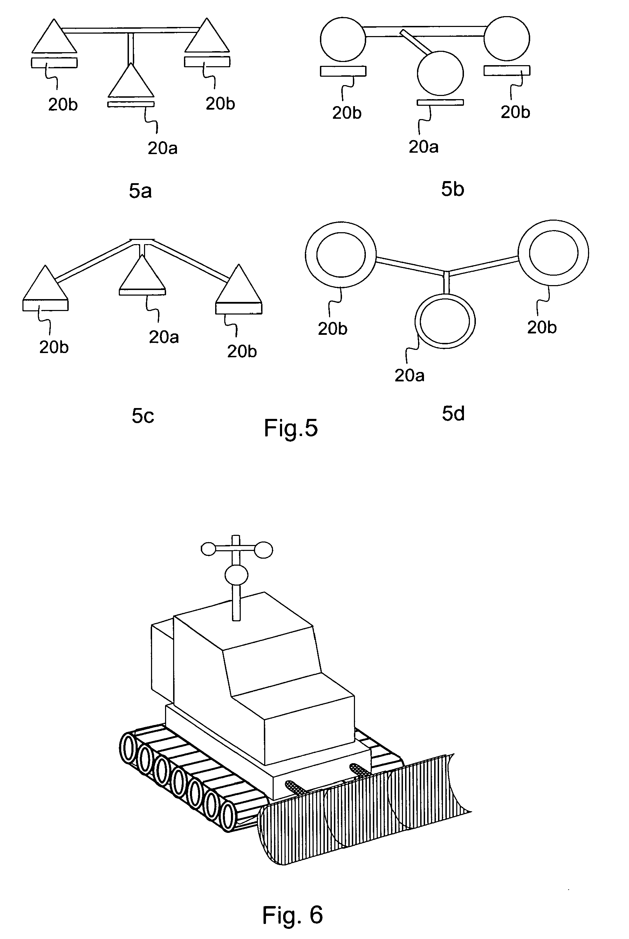

In Fig. 5 sind vier mögliche Ausführungen eines erfindungsgemässen Ausrichtungsindikators mit Filtern 20a, 20b, wie z.B. Spektral-, Polarisations-, Interferenz- oder Absorptionsfiltern, dargestellt. Dabei ist jeweils ein Filter 20a sowohl für die Strahlung der Raumrichtungsbestimmung, als auch für die Strahlung der elektronischen Abstandsmessung transparent. Zudem werden zwei Filter 20b anderen Typs verwendet, welche die Strahlung der elektronischen Distanzmessung absorbieren und/oder streuen, im Spektralbereich der Bilderfassungssensorik aber transparent sind. In den Teilfiguren 5a und 5b sind die Filter 20a, 20b den reflektiven Bereichen vorgeschaltet, in den Teilfiguren 5c und 5d sind die Filter 20a, 20b an den reflektiven Bereichen direkt angebracht. Eine weitere Möglichkeit wäre, die reflektiven Bereiche aus Filter-Material zu fertigen. Die Verwendung von Filtern 20a, 20b bzw. Filter-Materialien ist besonders für Messungen auf grosse Entfernungen vorteilhaft. Bei Messungen auf grosse Distanzen besteht nämlich die Gefahr, dass mehr als nur ein reflektiver Bereich ins Gesichtsfeld des Abstandsmessensors 12 gerät, und die Abstandsmessung dadurch verfälscht wird. Deshalb werden vorzugsweise den reflektiven Bereichen, zu welchen kein Abstand gemessen wird, Filter 20b in der Art und Weise zugeordnet, dass das zur Abstandsmessung verwendete Strahlenbündel nicht reflektiert wird. Natürlich kann auf den für beide Wellenlängen transparenten Filter 20a bei nicht zu grosser Störung durch Fremdlicht auch verzichtet werden.

Fig. 6 zeigt eine Verwendung des Ausrichtungsindikators, bzw. des Verfahrens zur Bestimmung der Position und Ausrichtung eines Ausrichtungsindikators in der automatischen Maschinensteuerung. Ein Ausrichtungsindikator wird an z.B. einer Baumaschine befestigt. Mittels eines Messgeräts 1, beispielsweise eines Tachymeters, wird die Position und Ausrichtung des Ausrichtungsindikators und damit die Position und Ausrichtung der Maschine, an welcher der Ausrichtungsindikator befestigt ist, bestimmt. Damit sind eine Überwachung und darauf basierend auch eine automatische Steuerung der Maschine möglich. Aus dem Stand der Technik ist die Positionsbestimmung von mehreren Reflektoren, GPS-Empfängern oder Laser-Empfängern zur automatischen Maschinensteuerung bekannt. Beim erfindungsgemässen Verfahren genügt ein Ausrichtungsindikator ohne Stromversorgung auf einer Maschine und eine einmalige Messung - die gleichzeitige Messung von einem Abstand und drei Raumrichtungen - auf diesen, um die Maschine automatisch steuern zu können.

## Patentansprüche

1. Verfahren zur Bestimmung der Ausrichtung eines Ausrichtungsindikators,
mit
□einem Messgerät (1), insbesondere einem Tachymeter, mit einer Abstandsmessensorik (12) und einer Bilderfassungssensorik (13) und
□einem Ausrichtungsindikator, welcher mittelbar oder unmittelbar an einem Zielpunkt positionierbar ist, und welcher wenigstens drei reflektive
Bereiche (4',4",4"',6,6',6",6"',6" ",7,8) aufweist, die so ausgebildet und angeordnet sind,
dass sie
- in detektierbarer geometrischer Beziehung zueinander stehen,
- vermittels der Bilderfassungssensorik (13) gleichzeitig aufgelöst werden können,
**dadurch gekennzeichnet, dass**
□ vom Messgerät (1) zum Ausrichtungsindikator gleichzeitig eine gerichtete Emission
- eines kollimierten Strahlenbündels (2) zur Messung vermittels der Abstandsmessensorik (12) und
- eines divergenten Strahlenbündels (3) zur Erfassung vermittels der Bilderfassungssensorik (13) erfolgt, wobei sich die beiden Strahlenbündel (2,3) in Wellenlänge und/oder Polarisation unterscheiden, und
□das von den reflektiven Bereichen reflektierte und/oder gestreute kollimierte Strahlenbündel (2') und das von den reflektiven Bereichen reflektierte und/oder gestreute divergente Strahlenbündel (3') gleichzeitig erfasst werden, wobei
der Abstand vom Messgerät (1) zu wenigstens einem reflektiven
Bereich (4' ,4" ,4"' ,6,6' ,6" ,6"' ,6"" ,7,8) vermittels der Abstandsmessensorik (12) und die räumliche Lage der wenigstens drei reflektiven
Bereiche (4',4",4"',6,6',6",6"',6" ",7,8) vermittels der Bilderfassungssensorik (13) gleichzeitig bestimmt werden, und damit die
Ausrichtung des Ausrichtungsindikators festgestellt wird.

2. Verfahren nach Anspruch 1, **dadurch gekennzeichnet, dass** das divergente Strahlenbündel (3) eine Divergenz aufweist, die dem Gesichtsfeld der Bilderfassungssensorik (13) äquivalent und grösser als das Gesichtsfeld der Abstandsmessensorik (12) ist.

3. Verfahren nach Anspruch 1 oder 2, **dadurch gekennzeichnet, dass** die emittierten Strahlenbündel (2,3), die Abstandsmessensorik (12) und die
Bilderfassungssensorik (13) koaxial sind.

4. Verfahren nach einem der vorangehenden Ansprüche, **dadurch gekennzeichnet, dass** der Ausrichtungsindikator an einem Zielpunkt positioniert wird, und über die Ausrichtung des Ausrichtungsindikators und dessen geometrische Beziehung zum Zielpunkt der Abstand zum Zielpunkt ermittelt wird.

5. Verfahren nach Anspruch 1, 2, oder 3, **dadurch gekennzeichnet, dass** der Abstand zu wenigstens einem
reflektiven Bereich (4' ,4", 4"', 6, 6', 6", 6"', 6"", 7, 8) und die Raumrichtungen zu den wenigstens drei reflektiven
Bereichen (4',4",4"',6,6',6",6"',6" ",7,8) gleichzeitig bestimmt werden, und damit die Ausrichtung und Position des Ausrichtungsindikators festgestellt werden.

6. Verfahren nach Anspruch 5, **dadurch gekennzeichnet, dass** der Ausrichtungsindikator an einem Zielpunkt positioniert wird, und über die Ausrichtung und Position des Ausrichtungsindikators und dessen geometrische Beziehung zum Zielpunkt die Position des Zielpunkts ermittelt wird.

7. Verfahren nach einem der vorangehenden Ansprüche, **dadurch gekennzeichnet, dass** den reflektiven
Bereichen (4',4",4"',6,6',6",6"',6"",7,8) und/oder den Sensoren Filter zugeordnet werden.

8. Verfahren nach Anspruch 7, **dadurch gekennzeichnet, dass** die Messung vermittels der Abstandsmessensorik (12) zu mindestens einem reflektiven Bereich blockiert wird.

9. Ausrichtungsindikator, welcher mittelbar oder unmittelbar an einem Zielpunkt positionierbar ist,
mit
□ wenigstens drei reflektiven
Bereichen (4',4",4"',6,6',6",6"',6"",7,8), die so ausgebildet und angeordnet sind, dass
- sie in detektierbarer geometrischer Beziehung zueinander stehen,
- sie vermittels einer Bilderfassungssensorik (13) gleichzeitig aufgelöst werden können und
- vermittels einer Abstandsmessensorik (12) ein Abstand zu einem reflektiven
Bereich (4',4",4"',6,6',6",6"',6" ",7,8) gemessen werden kann,
**dadurch gekennzeichnet, dass**
a die reflektiven Bereiche so ausgestaltet sind, dass der zur Abstandsmessung verwendete reflektive Bereich von den anderen reflektiven Bereichen unterscheidbar ist.

10. Ausrichtungsindikator nach Anspruch 9, **dadurch gekennzeichnet, dass** wenigstens ein reflektiver
Bereich (4',4",4"',6,6',6",6"',6"",7,8) sich in seiner Grösse von den anderen reflektiven
Bereichen (4',4",4"',6,6',6",6"',6"",7,8) unterscheidet.

11. Ausrichtungsindikator nach Anspruch 9, **dadurch gekennzeichnet, dass** alle reflektiven
Bereiche (4',4",4"',6,6',6",6"',6" ",7,8) sich in ihrer Grösse voneinander unterscheiden.

12. Ausrichtungsindikator nach einem der Ansprüche 9 bis 11, **dadurch gekennzeichnet, dass** wenigstens einem reflektiven Bereich (4', 4", 4"', 6, 6', 6", 6"', 6"", 7, 8) ein
Filter (20a,20b) zugeordnet, insbesondere vorgeschaltet, ist.

13. Ausrichtungsindikator nach einem der Ansprüche 8 bis 12, **dadurch gekennzeichnet, dass** wenigstens ein reflektiver Bereich (4',4",4"',6,6',6",6"',6" ",7,8) als eine der folgenden Alternativen ausgebildet ist:
- 360°-Reflektor ,
- kugelförmiger Rundumreflektor (6, 6' , 6 " , 6 " ' , 6 "") ,
- zylinderförmiger 360°-Reflektor (7),
- Tripelprisma (8).

14. Ausrichtungsindikator nach einem der Ansprüche 8 bis 13, **dadurch gekennzeichnet, dass** wenigstens ein reflektiver
Bereich (4',4",4"',6,6',6",6"',6" ",7,8) wenigstens eine der folgenden Alternativen aufweist:
- Reflektorfolie,
- Tripelprismen,
- Mikrolinsen.

15. Ausrichtungsindikator nach einem der Ansprüche 8 bis 14, **dadurch gekennzeichnet, dass** die reflektiven
Bereiche (4', 4'', 4''', 6, 6', 6'', 6'", 6"",7, 8) vermittels einer Verbindungseinheit, insbesondere einem Gestänge, miteinander verbunden sind und beispielsweise eine sternförmige Anordnung ergeben.

16. Ausrichtungsindikator nach einem der Ansprüche 8 bis 15, **dadurch gekennzeichnet, dass** der Ausrichtungsindikator einem Reflektorträger (5), insbesondere einem Lotstock, zugeordnet ist.

17. Verwendung des Verfahrens nach Anspruch 1 bis 10 zur Abstands- und/oder Positionsbestimmung von nicht direkt einsehbaren Zielpunkten.

18. Verwendung des Ausrichtungsindikators nach
Anspruch 9 bis 16 zur Abstands- und/oder Positionsbestimmung von nicht direkt einsehbaren Zielpunkten.

19. Verwendung des Verfahrens nach Anspruch 1 bis 8 zur automatischen Maschinensteuerung.

20. Verwendung des Ausrichtungsindikators nach
Anspruch 9 bis 16 zur automatischen Maschinensteuerung.
